# EUROPÄISCHE PATENTANMELDUNG

(11) **EP 1 505 285 A2**
(43) Veröffentlichungstag der Anmeldung: **09.02.2005**
(21) Anmeldenummer: 04026635.5
(22) Anmeldetag: 14.11.1998
(51) Int. Cl.: F02D 41/02, F01N 3/08

(54) **Abgaskonvertersystem für einen Dieselmotor**

(30) Priorität: 04.12.1997 DE 19753718
(62) Teilanmeldung aus: 98963456.3
(71) Anmelder: DaimlerChrysler AG, 70567 Stuttgart (DE)
(72) Erfinder: Duvinage, Frank, Dr., 73230 Kirchheim (DE); Fausten, Hans, 73278 Schlierbach (DE); Fekete, Nicholas, Dr., 70597 Stuttgart (DE); Kerckhoff, Anton, Dr., 70193 Stuttgart (DE); Krutzsch, Bernd, Dr., 73770 Denkendorf (DE); Liebscher, Thomas, 70736 Fellbach (DE); Pischinger, Stefan, Prof., 52076 Aachen (DE); Weibel, Michel, Dr., 70619 Stuttgart (DE)

(57) **Zusammenfassung**

Die Erfindung betrifft ein Verfahren zum Betreiben eines Dieselmotors mit einer Motorregelung, die in Abhängigkeit von Kennfeldern den Betrieb des Dieselmotors regelt und eine Fett/Mager-Regelung des Dieselmotors ermöglicht, wobei die Motorregelung einen Rechner, der in Abhängigkeit von vorbestimmten Umschaltkriterien ein Umschalten auf Fett- oder Mager-Betrieb des Dieselmotors bewirkt, eine mit dem Rechner kommunizierende Sensorik, die für Umschaltkriterien notwendige Parameter überwacht, und einen mit dem Rechner kommunizierende Sensorik, die für Umschaltkriterien notwendige Parameter überwacht, und einen mit dem Rechner kommunizierenden Speicher aufweist, in dem die Kennfelder für den Betrieb des Dieselmotors gespeichert sind, und wobei der Rechner ein Umschalten von Mager- auf Fett-Betrieb bewirkt, wenn alle diesbezüglichen Umschaltkriterien erfüllt sind, und ein Zurückschalten von Fett- auf Mager-Betrieb bewirkt, wenn zumindest eines der diesbezüglichen Umschaltkriterien erfüllt ist.

## Beschreibung

Die Erfindung betrifft ein Abgaskonvertersystem für einen Dieselmotor mit einem regenerierbaren Speicherkatalysatorelement zur Speicherung von Stickoxiden bei einem mageren Betrieb des Dieselmotors.

Um die Schadstoffemission eines Dieselmotors zu reduzieren, werden diese z.B. mit einer von den Abgasen des Dieselmotors durchströmten Abgasreinigungsanlage betrieben. Zur Reinigung können NOₓ-Adsorbersysteme verwendet werden, die sich durch ein hohes Potential an NOₓ-Speicherfähigkeit auszeichnen. Derartige, auch als NOₓ-Adsorberkatalysatoren bezeichnete Abgasreinigungsanlagen speichern unter bestimmten Voraussetzungen die Stickoxide (NOₓ) von Verbrennungskraftmaschinen, sofern diese "mager" betrieben werden. Ein Mager-Betrieb liegt vor, wenn das Verbrennungs-Luftverhältnis Lambda (λ) größer als 1 ist, das heißt wenn eine überstöchiometrische Verbrennung vorliegt, bei der Restsauerstoff im Abgas vorhanden ist. Zur Regeneration derartiger, aufgrund ihrer Speicherfähigkeit auch als Speicherkatalysator bezeichneten NOₓ-Adsobersysteme wird reduzierend wirkendes Abgas mit möglichst hohem Reduktionsmittelgehalt benötigt, damit das im NOₓ-Adsorberkatalysator gespeicherte NOₓ freigesetzt und zu Stickoxid N₂ umgesetzt werden kann. Eine Verbrennungskraftmaschine produziert reduzierend wirkendes Abgas, wenn eine "fette" Verbrennung, das heißt eine unterstöchiomentrische Verbrennung mit λ < 1 vorliegt, bei der kein oder nur noch wenig Restsauerstoff im Abgas vorhanden ist.

Dieselmotoren arbeiten im gesamten Kennfeldbereich in folge des heterogenen Gemischbildungsverfahrens mit Sauerstoffüberschuss (λ > 1). Um bei Dieselmotoren ein NOₓ-Adsorbersystem zur Reinigung der Dieselmotorabgase verwenden zu können, muss auch der Dieselmotor zeitweise auf Fett-Betrieb umgestellt werden können, das heißt der Dieselmotor muss Betriebsphasen aufweisen, in denen eine unterstöchiometrische Verbrennung mit λ < 1 vorliegt.

Aus der DE 43 34 763 A1 ist ein Verfahren zum Betreiben einer Brennkraftmaschine bekannt, wobei in einer Abgasreinigungsanlage eine Adsorptionseinrichtung für Stickoxide (NOₓ) angeordnet ist, die NOₓ adsorbiert, wenn das Verbrennungsluftverhältnis Lambda mager ist (λ > 1) und adsorbiertes NOₓ freisetzt, wenn das Verbrennungsluftverhältnis fett wird (λ < 1). Bei diesem bekannten Verfahren wird die Temperatur der NOₓ-Adsorptionseinrichtung durch Einspritzen von Brennstoff in das Abgas erhöht und durch Einblasen von Luft in das Abgas gesenkt, um die Arbeitstemperatur der NOₓ-Speichereinrichtung innerhalb eines festgelegten Bereiches zu halten.

Aus der DE 195 43 219 Cl ist ein Verfahren der eingangs genannten Art bekannt, bei dem stromab des Speicherkatalysators ein Sensor zur Erfassung der NOₓ-Konzentration im Abgasstrom angeordnet ist, der bei Erreichen eines kennfeldmäßig in Abhängigkeit von Drehzahl und Motorlast variierenden NOₓ-Speicher-Schwellwertes auf ein Umschalten von einem Betrieb des Dieselmotors mit λ > 1 auf einen Betrieb mit λ < 1 auslöst, um im Fett-Betrieb des Dieselmotors ( λ < 1) den Speicherkatalysator zu regenerieren. Zu diesem Zweck umfasst beim bekannten Verfahren eine Motorregelung einen Rechner, der in Abhängigkeit von vorbestimmten Umschaltkriterien ein Umschalten auf Fett- oder Mager-Betrieb des Dieselmotors bewirkt, und eine mit dem Rechner kommunizierende Sensorik, die für Umschaltkriterien notwendige Parameter überwacht, sowie einen mit dem Rechner kommunizierenden Speicher, in dem die Kennfelder für den Betrieb des Dieselmotors gespeichert sind.

Ein Dieselmotor wird üblicherweise derart betrieben, dass sich eine maximale Leistungsentfaltung bei minimalem Kraftstoffverbrauch ergibt. Zusätzlich werden weitere Randbedingungen, wie Abgasemissionswerte, Rauchentwicklung und Laufruhe, der Abstimmung des Motorbetriebes berücksichtigt. Die genannten Anforderungen haben zur Folge, dass ein Dieselmotor üblicherweise für den Mager-Betrieb optimiert ist. Dieser Optimal-Betrieb des Dieselmotors muss bei einem Abgasreinigungssystem mit einem Speicherkatalysator zeitweise für einen Fett-Betrieb unterbrochen werden, während dem der Adsorberkatalysator regeneriert wird.

Die vorliegende Erfindung beschäftigt sich mit dem Problem, ein Abgaskonvertersystem für einen Dieselmotor anzugeben, welcher eine weiter verbesserte Stickoxidverminderung ermöglicht.

Dieses Problem wird erfindungsgemäß durch ein Abgaskonvertersystem mit den Merkmalen des Patentanspruches 1 gelöst. Die Merkmale der Unteransprüche geben vorteilhafte Aus- und Weiterbildungen der Erfindung an.

Die Erfindung beruht auf dem allgemeinen Gedanken, spezielle Umschaltkriterien für ein Umschalten von Mager-Betrieb auf Fett-Betrieb des Dieselmotors sowie spezielle Umschaltkriterien für ein Zurückschalten von Fett-Betrieb auf Mager-Betrieb vorzusehen, wobei ein Umschalten auf den hinsichtlich des Motorbetriebes ungünstigeren Fett-Betrieb nur dann erfolgt, wenn sämtliche diesbezüglich vorgesehenen Umschaltkriterien erfüllt sind und ein Zurückschalten auf den hinsichtlich des Motorbetriebsverhaltens günstigeren Mager-Betrieb bzw. ein Abbruch des Fett-Betriebs bereits dann erfolgt, wenn bereits eines der diesbezüglich vorgesehenen Umschaltkriterien erfüllt ist. Mit Hilfe dieser Maßnahmen ist es möglich, die Umschaltkriterien derart zu wählen, dass einerseits ein Fett-Betrieb des Dieselmotors nur dann erfolgt, wenn dies für die Regeneration des Adsorbersystems notwendig ist, und dass andererseits der Fett-Betrieb nur solange erfolgt, wie er zur Regeneration des Adsorbersystems erforderlich ist, und/oder der Fett-Betrieb beendet bzw. unterbrochen wird, wenn dies für die Aufrechterhaltung eines bestimmten Motorbetriebsverhaltens erforderlich ist.

Als spezielles Umschaltkriterium für ein Umschalten von Mager- auf Fett-Betrieb des Dieselmotors dient beim erfindungsgemäßen Verfahren die Einhaltung einer Regenerationstemperatur eines von den Abgasen des Dieselmotors durchströmten Speicherkatalysatorelementes. Durch die Einhaltung der Regenerationstemperatur des Speicher- oder Adsorptionskatalysators kann die Regenerationszeit und somit die Dauer der Fett-Betriebs-Phase verkürzt werden, da der Speicherkatalysator nur oberhalb einer bestimmten Temperatur die Fähigkeit besitzt, adsorbiertes NOx freizusetzen und gleichzeitig dieses in molekularen Stickstoff N₂ umzusetzen.

Entsprechend einer Weiterbildung des erfindungsgemäßen Verfahrens kann zur Überwachung der Regenerationstemperatur ein Temperatursensor verwendet werden, der vor dem Einlass des Speicherkatalysatorelementes im Abgasstrang angeordnet ist und mit der Sensorik kommuniziert, wobei die Regenerationstemperatur, bei der ein Umschalten auf den Fett-Betrieb er folgen kann, vorzugsweise in einem vorbestimmten Temperaturbereich liegt.

Bei einer besonderen Ausbildung der Abgasreinigungseinrichtung des Dieselmotors kann dem Speicherkatalysator-Element ein sauerstoffverbrauchendes Katalysatorelement, insbesondere ein Oxidationskatalysator vorgeschaltet sein. Bei einer zweckmäßigen Ausgestaltung des erfindungsgemäßen Verfahrens kann bei einem derart aufgebauten Konvertersystem der Temperatursensor zwischen dem Speicherkatalysatorelement und dem sauerstoffverbrauchenden Katalysatorelement angeordnet sein, wodurch neben der Überwachung der Regenerationstemperatur auch Überwachung der Energiefreisetzung in Folge der exothermen Reaktionen im sauerstoffverbrauchenden Katalysatorelement durchgeführt werden kann.

Als weiteres Umschaltkriterium, das für ein Umschalten von Mager auf Fett-Betrieb des Dieselmotors erfüllt sein muss, dient beim erfindungsgemäßen Verfahren das Vorliegen eines bestimmten Beladungszustandes eines von den Abgasen des Dieselmotors durchströmten Speicherkatalysator-Elementes. Diese Maßnahme verhindert ein häufiges Umschalten auf den Fett-Betrieb, wodurch sich das Gesamt-Betriebsverhalten des Dieselmotors erheblich verbessert. Um den Beladungszustand des Speicherkatalysators zu erfassen, können mehrere Maßnahmen durchgeführt werden.

Bei einer bevorzugten Ausführungsform des erfindungsgemäßen Verfahrens kann der Beladungszustand des Speicherkatalysatorelementes mit Hilfe von Kennfeldern erfasst werden, in denen das Speichervermögen des Speicherkatalysator-Elementes in Abhängigkeit von dessen Temperatur und Beladungszustand und die Abgasemissionswerte des Dieselmotors in Abhängigkeit des Motorbetriebszustandes abgelegt sind. Mit Hilfe dieser Kennfelder wird ausgehend von einem Anfangs-Beladungszustand zu Beginn einer Mager-Betriebs-Phase die Zunahme der Beladung pro Zeiteinheit bestimmt und der jeweils aktuelle Beladungszustand errechnet.

Vorteilhafterweise können bei einer Weiterbildung des erfindungsgemäßen Verfahrens NOₓ-Sensoren vorgesehen sein, die mit der Sensorik kommunizieren und im Abgasstrang vor und nach dem Speicherkatalysatorelement angeordnet sind und mit deren Hilfe zur Bestimmung des Beladungszustandes des Speicherkatalysatorelementes die von diesem adsorbierte NOx-Menge überwachen.

Bei einer anderen Ausführungsform des erfindungsgemäßen Verfahrens ist zur Bestimmung des Beladungszustandes des Speicherkatalysators ein NOₓ-Sensor vorgesehen, der mit der Sensorik kommuniziert und im Abgasstrang nach dem Speicherkatalysatorelement angeordnet ist und die aus dem Speicherkatalysator-Element austretende NOₓ-Menge überwacht. Dabei wird dem vorbestimmten Beladungszustand, bei dem eine Umschaltung auf den Fett-Betrieb erfolgen soll, ein vorbestimmter Maximalwert für die detektierte NOx-Menge zugeordnet.

Bei einer besonders vorteilhaften Ausführungsform des erfindungsgemäßen Verfahrens dient als Umschaltkriterium für ein Umschalten von Mager- auf Fett-Betrieb des Dieselmotors das Vorliegen eines stationären oder quasistationären Motorbetriebszustandes. Mit Hilfe dieser Maßnahme ist es möglich, das Betriebsverhalten des Dieselmotors während seines Fett-Betriebes relativ einfach an das entsprechende Betriebsverhalten während des Mager-Betriebes anzugleichen, so dass z.B. hinsichtlich der Leistungsentfaltung des Dieselmotors vom Fahrer in der Regel keine Veränderung bemerkt wird.

Bei einer Weiterbildung des erfindungsgemäßen Verfahrens können zur Erkennung eines stationären oder quasistationären Motorbetriebszustandes mit Hilfe der Sensorik Signalwerte überwacht werden, die mit der Motordrehzahl und/oder mit der Pedalstellung und/oder mit der Einspritzmenge und/oder mit der Abgastemperatur, beispielsweise vor dem Einlass eines Abgasturboladers und/oder mit dem Motordrehmoment und/oder mit der Motorlast korrelieren. Dabei wird vorzugsweise auf die der elektronischen Motorsteuerung bzw. Motorregelung ohnehin zur Verfügung stehenden Signale bezüglich Motordrehzahl und Pedalstellung zurückgegriffen. Als Anhaltspunkt für einen stationären oder quasistationären Motorbetriebszustand kann die momentan herrschende Motorleistung bzw. Motorlast dienen, die z.B. anhand der aktuellen Einspritzmenge und der aktuellen Motordrehzahl bestimmt werden kann. Eine wirkungsvolle Aussage über den Zustand des Motors ist auch mit Hilfe eines Sensors möglich, der das Motordrehmoment detektiert.

Zweckmäßigerweise erkennt die Motorregelung bei einer Ausgestaltung des erfindungsgemäßen Verfahrens das Vorliegen eines stationären oder quasistationären Motorbetriebszustandes, wenn Änderungen der überwachten Signale während vorbestimmter Zeiteinheiten vorbestimmte Schwellwerte nicht übersteigen.

Beim Verfahren nach der Erfindung dient als Umschaltkriterium für ein Zurückschalten von Fett- auf Mager-Betrieb des Dieselmotors das Nichtvorliegen eines der Umschaltkriterien für ein Umschalten von Mager- auf Fett-Betrieb, wobei jedoch das den Beladungszustand betreffende Umschaltkriterium ausgenommen ist.

Außerdem dient beim erfindungsgemäßen Verfahren als zusätzliches oder alternatives Umschaltkriterium für ein Zurückschalten von Fett- auf Mager-Betrieb des Dieselmotors der Ablauf einer Regenerationszeit, die von dem jeweiligen Beladungszustand eines von den Abgasen des Dieselmotors durchströmten Speicherkatalysatorelementes zu Beginn der Fett-Betriebsphase abhängt.

Die jeweilige Regenerationszeit, innerhalb der eine nahezu vollständige Freisetzung und Umsetzung der gespeicherten Stickoxide erreicht werden kann, ist vom jeweiligen Motorbetriebszustand des Dieselmotors abhängig. Bei Kenntnis der sich bei diesem Motorbetriebszustand während einer Fett-Betriebs-Phase einstellenden Abgaszusammensetzung hinsichtlich der Reduktionsmittel Kohlenmonoxid(CO) und Kohlenwasserstoffe (HC) sowie des Beladungszustandes des Speicherkatalysators im Zeitpunkt der Umschaltung auf den Fett-Betrieb des Motors ergibt sich für jeden Motorbetriebszustand aus dem vorliegenden Abgasvolumenstrom und aus den entsprechenden chemischen Reaktionsgleichungen eine relativ genaue Zeitvorgabe, innerhalb der die für die vollständige Regeneration des Speicherkatalysators erforderliche Menge bzw. Masse an Reduktionsmitteln bereitgestellt werden kann. Vorzugsweise wird bei einer Weiterbildung des erfindungsgemäßen Verfahrens die Regenerationszeit des Speicherkatalysatorelementes mit Hilfe von Kennfeldern bestimmt, in denen die Regenerationszeit in Abhängigkeit des Motorbetriebszustandes und des Beladungszustandes des Speicherkatalysators abgelegt ist.

Des weiteren dient beim erfindungsgemäßen Verfahren als zusätzliches oder alternatives Umschaltkriterium für ein Zurückschalten von Fett- auf Mager-Betrieb des Dieselmotors das Vorliegen eines vorbestimmten Entladungszustandes eines von den Abgasen des Dieselmotors durchströmten Speicherkatalysator-Elementes. Dabei kann bei einer zweckmäßigen Ausgestaltung dieses Verfahrens der Entladungszustand des Speicherkatalysators wiederum mit Hilfe von Kennfeldern überwacht werden, in denen die Regenerationszeit für ein Speicherkatalysator-Element in Abhängigkeit des Beladungszustandes abgelegt sind.

Entsprechend einer besonders zweckmäßigen Ausführungsform des erfindungsgemäßen Verfahrens wird der aktuelle Beladungszustand während des Mager-Betriebes und des Fett-Betriebes dadurch bestimmt, dass einerseits der Beladungszustand zu Beginn einer Mager-Betriebs-Phase aus dem Beladungszustand zu Beginn einer Fett-Betriebs-Phase abzüglich der insbesondere kennfeldmäßig zugeordneten Entladung während der Fett-Betriebs-Phase ermittelt wird und dass andererseits der Beladungszustand zu Beginn einer Fett-Betriebs-Phase aus dem Beladungszustand zu Beginn einer Mager-Betriebs-Phase zuzüglich der insbesondere kennfeldmäßig zugeordneten Beladung während der Mager-Betriebs-Phase ermittelt wird, wobei für die Beladung und Entladung entsprechende Kennfelder vorgesehen sind.

Als weiteres oder alternatives Umschaltkriterium für ein Zurückschalten von Fett auf Mager-Betrieb des Dieselmotors dient beim erfindungsgemäßen Verfahren das Vorliegen eines vorbestimmten Reduktionsmittelgehaltes in den Abgasen nach einem Speicherkatalysator-Element. Mit dieser Maßnahme kann ein Durchbruch von Reduktionsmitteln durch den Speicherkatalysator festgestellt werden. Zu einem solchen Durchbruch an Reduktionsmittel kommt es dann, wenn nach vollständiger Desorption und Umsetzung der gespeicherten Stickoxide der Dieselmotor weiterhin im Fett-Betrieb arbeitet. Ein derartiger Reduktionsmitteldurchbruch wird beispielsweise dann angenommen, wenn ein vorbestimmter Schwellwert für die HC-Emission und/oder CO-Emission des Speicherkatalysators überschritten wird, wobei dieser Schwellwert entsprechend dem Verhältnis von Kohlenmonoxid zu Kohlenwasserstoffen im Abgas des Dieselmotors bei dessen Fett-Betrieb vorzugsweise in Kennfeldern festgelegt ist.

Um den Reduktionsmittelgehalt der Abgase nach dem Speicherkatalysator festzustellen, kann entsprechend einer Weiterbildung des erfindungsgemäßen Verfahrens im Abgasstrang nach dem Speicherkatalysator wenigstens ein Reduktionsmittelsensor angeordnet sein, der als HC-Sensor oder als CO-Sensor oder als Lambda-Sonde ausgebildet ist.

Bei einem Dieselmotor mit einem Konvertersystem, dessen Speicherkatalysator ein DeNOx-Katalysatorelement nachgeschaltet ist, kann bei einer zweckmäßigen Ausführungsform der Reduktionsmittelsensor zwischen dem Speicherkatalysatorelement und diesem DeNOx-Katalysatorelement angeordnet sein.

Darüber hinaus dient beim erfindungsgemäßen Verfahren als zusätzliches oder alternatives Umschaltkriterium für ein Zurückschalten von Fett- auf Mager-Betrieb des Dieselmotors das Vorliegen einer Abgastemperatur, die unterhalb eines vorbestimmten Schwellwertes liegt. Zur Detektion der Abgastemperatur kann entsprechend einer Weiterbildung ein Temperatursensor vorgesehen sein, der vor einem von den Abgasen durchströmten Speicherkatalysatorelement im Abgasstrang angeordnet ist und mit der Sensorik kommuniziert.

Eine derartige Ausgestaltung ist insbesondere dann von Vorteil, wenn das dem Dieselmotor nachgeschaltete Konvertersystem ein vor dem Speicherkatalysator angeordnetes sauerstoffverbrauchendes Katalysatorelement aufweist. Wenn die in dem sauerstoffverbrauchenden Katalysatorelement ablaufenden exothermen Reaktionen eine Temperaturerhöhung verursachen, derart, dass die Abgastemperatur im Eintrittsbereich des Speicherkatalysators einen bestimmten Grenzwert überschreitet, ist die thermische Stabilität des Katalysators und weiterer Motorbauteile gefährdet, so dass ein Zurückschalten in den Mager-Betrieb erforderlich ist. In diesem Fall wird der Temperatursensor vorzugsweise zwischen dem Speicherkatalysatorelement und dem diesem vorgeschalteten sauerstoffverbrauchenden Katalysatorelement angeordnet.

Entsprechend einer Weiterbildung des erfindungsgemäßen Verfahrens dient als Umschaltkriterium für ein Zurückschalten von Fett- auf Mager-Betrieb des Dieselmotors das Vorliegen eines instationären Motorbetriebszustandes. Insbesondere können zur Erkennung des instationären Motorbetriebszustandes mit Hilfe der Sensorik wiederum Signale überwacht werden, die mit der Motordrehzahl und/oder der Pedalstellung und/oder der Einspritzmenge und/oder der Abgastemperatur, vorzugsweise vor dem Einlass eines Abgasturboladers, und/oder der Motordrehzahl und/oder der Motorlast korrelieren. Vorzugsweise erkennt bei einer derartigen Ausgestaltung des erfindungsgemäßen Verfahrens die Motorsteuerung das Vorliegen eines instationären Motorbetriebszustandes, wenn Änderungen der überwachten Signalwerte während vorbestimmter Zeiteinheiten vorbestimmte Schwellwerte überschreiten.

Bei einer besonders vorteilhaften Ausführungsform eines Verfahrens nach der Erfindung, bei dem ein Umschalten in den Fett-Betrieb erfolgen kann, wenn ein stationärer oder quasistationärer Motorbetriebszustand vorliegt, und bei dem ein Zurückschalten in den Mager-Betrieb erfolgt, wenn ein instationärer Motorbetriebszustand vorliegt, kann vorgesehen sein, dass die zur Feststellung eines instationären Motorbetriebszustandes vorbestimmten Zeiteinheiten und Schwellwerte sich von den vorbestimmten Zeiteinheiten und Schwellwerten zur Feststellung eines stationären oder quasistationären Motorbetriebszustandes unterscheiden. Diese Maßnahme ermöglicht eine optimale Anpassung der Umschaltkriterien sowohl an einen hohen Fahrkomfort als auch an ein ökonomisches und ökologisches Betriebsverhalten des Motors.

Weitere wichtige Merkmale und Vorteile ergeben sich aus den Unteransprüchen, der Zeichnung und aus der nachfolgenden Figurenbeschreibung eines bevorzugten Ausführungsbeispieles anhand der Zeichnung.

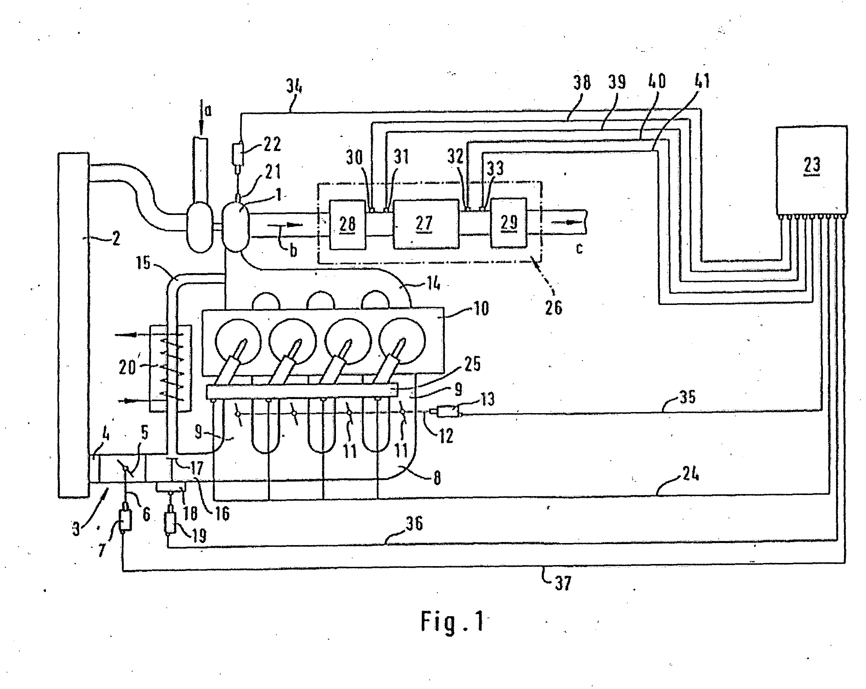

Es zeigt
Fig. 1 eine schematische Anordnung eines Abgasturbolader, Dieselmotors mit Abgasrückführung, Abgasreinigungseinrichtung und einer Motorsteuerung nebst zugehörigen Leitungen, die einzelne Aggregate mit der Motorsteuerung verbinden.

Entsprechend Fig. 1 saugt ein Abgasturbolader 1 auf seiner Verdichtereintrittsseite Frischluft entsprechend dem Pfeil a an, diese durchströmt bei entsprechend erhöhtem Druck einen Wärmetauscher 2 und erreicht eine Drosselstelle 3 in der Ansaugleitung 4.

In der Drosselstelle 3 ist eine Drosselklappe 5 angeordnet, die über ein Stellglied 6 von einem hilfskraftbetätigten Stellantrieb 7 betätigbar ist. Nach der Drosselstelle 3 durchquert die Frischluft zunächst ein Saugrohr 16 und erreicht dann eine Luftsammelkammer 8, von wo aus sie über separate Ansaugtrakte 9 den Brennbereichen des Dieselmotors 10 zugeführt wird. In den Ansaugtrakten 9 sind jeweils einzelne Drosselklappen 11 angeordnet, die entsprechend dem Ausführungsbeispiel über ein gemeinsames Stellglied 12 von einem hilfskraftbetätigten Stellantrieb 13 betätigbar sind.

Stromab des Motors 10 werden die während der Verbrennung gebildeten Abgase in einer Abgassammelkammer 14 gesammelt und zum Teil der Turbineneintrittsseite des Abgasturboladers 1 zugeführt. Außerdem kommuniziert die Abgassammelkammer 14 mit einer Abgasrückführungsleitung 15, die im Saugrohr 16, das heißt nach der Drosselstelle 3 und vor der Luftsammelkammer 8 in der Luftansaugleitung 4 mündet.

Im Mündungsbereich der Abgasrückführungsleitung 15 ist im Saugrohr 16 ein Ventil 17 angeordnet, das über ein Stellglied 18 von einem hilfskraftbetätigten Stellantrieb 19 betätigbar ist. Im dargestellten Ausführungsbeispiel steht die Abgasrückführungsleitung 15 mit einem Wärmetauscher 20 im Wärmeaustausch, so dass gegebenenfalls eine Kühlung des rückgeführten Abgases erreicht werden kann.

Der Turbineneintrittsquerschnitt und/oder der die Turbine durchströmende Abgasvolumenstrom ist mit Hilfe eines Stellgliedes 21 veränderbar, das von einem Stellantrieb 22 betätigbar ist. Nach dem Durchströmen der Turbine des Abgasturboladers 1 wird das Abgas entsprechend dem Pfeil b einem Abgasreinigungssystem oder Konvertersystem 26 zugeleitet. Entsprechend Pfeil c wird das gereinigte Abgas z.B. durch einen nicht gezeigten Auspuff in die Umgebung abgeführt.

Das Konvertersystem 26 besteht aus einem Adsorber- oder Speicherkatalysatorelement 27, einem diesem vorgeschalteten sauerstoffverbrauchenden Katalysatorelement 28, das vorzugsweise als Oxidationskatalysator ausgebildet ist, und aus einem dem NOₓ-Adsorberkatalysator 27 nachgeschalteten DeNOx-Katalysatorelement 29. Das Konvertersystem 26 besteht somit aus mehreren Teilelementen 27, 28 und 29, in denen unterschiedliche chemische Reaktionen ablaufen. Die Teilelemente 27, 28 und 29 können derart angeordnet sein, dass sich der Oxidationskatalysator 28 relativ dicht vor dem Adsorberkatalysator 27 befindet, während sich der DeNOₓ-Katalysator 29 relativ weit vom Adsorberkatalysator 27 entfernt befindet. Auf diese Weise kann die Temperatur der Abgase auf ihrem Strömungsweg vom Adsorberkatalysator 27 zum DeNOₓ-Katalysator 29 absinken bzw. abgesenkt werden.

Ein Oxidationskatalysator 28 wird verwendet, um den restlichen Sauerstoffgehalt den Dieselabgasen zu entziehen. Dies bewirkt im Mager-Betrieb des Dieselmotors, dass die Speicherfähigkeit des Adsorberkatalysators 27 für NOx erhöht wird, da keine Speicherkapazität durch die ungewollte Speicherung von Sauerstoff (O₂) verloren geht. Der Oxidationskatalysator 28 ist jedoch auch für den Fett-Betrieb hilfreich. Denn aufgrund der heterogenen Gemischbildung im Dieselmotor sind auch bei einem unterstöchiometrischen Gesamtverbrennungsluftverhältnis (λ < 1) die Dieselabgase nicht vollkommen sauerstofffrei. Im Fett-Betrieb bewirkt der Oxidationskatalysator 28 daher eine Steigerung der Regenerationsgeschwindigkeit. Außerdem kann durch die im Oxidationskatalysator 28 ablaufende exotherme oder wärmeenergiefreisetzende Reaktion die Betriebstemperatur des Adsorberkatalysators 27 früher erreicht werden.

Ein DeNOₓ-Katalysator 29 wird verwendet, um in Betriebszuständen in denen der Adsorberkatalysator 27 nicht ordnungsgemäß arbeitet, den Adsorberkatalysator 27 durchströmende, nicht adsorbierte Stickoxide NOₓ zu reduzieren. Derartige Betriebszustände, in denen der Adsorberkatalysator 27 nicht optimal funktioniert, sind z.B. dann gegeben, wenn das zugeführte Abgas außerhalb des Betriebstemperaturbereichs des Adsorptionskatalysators 27 liegt oder wenn der Adsorptionskatalysator 27 zu einem hohen Grad gesättigt ist. Um durch den Adsorberkatalysator 27 "durchschlagendes" NOₓ zu reduzieren, sind im DeNOₓ-Katalysator 29 Reduktionsmittel gespeichert, die zur Reduktion der Stickoxide freigesetzt werden können. Die Aufladung des DeNOₓ-Katalysator 29 kann z.B. während des Fett Betriebes innermotorisch erfolgen, wenn die entsprechenden Reduktionsmittel gegen Ende der Regenerationsphase des Adsorberkatalysators 27 vermehrt diesen durchdringen. Ebenso kann z.B. über eine spezielle Kraftstoffeinspritzung eine außermotorische Reduktionsmittelzufuhr realisiert werden.

Im Abgasstrom sind zwischen dem Oxidationskatalysator 28 und dem Adsorberkatalysator 27 ein Temperatursensor 30 sowie ein erster NOₓ-Sensor 31 angeordnet. Zwischen dem Adsorptionskatalysator 27 und dem DeNOx-Katalysator 29 sind ein zweiter NOₓ-Sensor 32 sowie ein HC-Sensor 33 im Abgasstrom angeordnet.

Der Dieselmotor wird von einer Motorsteuerung oder Motorregelung 23 gesteuert bzw. geregelt, wozu diese über Leitungen mit den entsprechenden Aggregaten des Dieselmotors 10 verbunden ist. Beispielsweise ist in der Fig. 1 eine Leitung 24 dargestellt, welche die Motorregelung 23 mit einer Einspitzanlage 25 des Dieselmotors 10 verbindet. Weitere Leitungen 34, 35, 36 und 37 verbinden die Motorregelung 23 mit den Stellantrieben 22, 13, 19 und 7. Darüber hinaus kommuniziert die Motorregelung 23 über Verbindungsleitungen 38, 39, 40 und 41 mit dem Temperatursensor 30, mit den NOₓ-Sensoren 31 und 32 sowie mit dem HC-Sensor 33. Außerdem kommuniziert die Motorregelung 23 mit einer nicht dargestellten Sensorik, die mit Hilfe von Sensoren verschiedene Parameter des Dieselmotors 10, insbesondere des Konvertersystems 26 detektiert.

In der Motorregelung 23 ist ein Rechner oder Mikroprozessor sowie ein damit kommunizierender Speicher integriert. In diesem Speicher sind zum einen Kennfelder für den Mager-Betrieb des Dieselmotors 10 zum anderen aber auch Kennfelder für den Fett-Betrieb des Dieselmotors 10 abgespeichert. Über einen Softwareschalter wird festgelegt, nach welchen Kennlinien der Dieselmotor 10 von der Motorregelung 23 geregelt werden soll. Die Stellung des Softwareschalters richtet sich dabei nach Umschaltkriterien, deren Vorliegen vom Rechner ständig überprüft wird. Der Rechner kann zur Überwachung der Umschaltkriterien einerseits auf Signale bzw. Signalwerte zurückgreifen, die ohnehin in der Motorregelung vorhanden sind, wie z.B. Motordrehzahl, Gaspedalstellung. Andererseits können zur Überwachung anderer Umschaltkriterien zusätzliche Signale bzw. Signalwerte berücksichtigt werden.

Beispielsweise wird der Temperatursensor 30 dazu verwendet, die Abgastemperatur vor dem Einlass des Speicherkatalysatorelementes 27 zu messen. Ein Umschaltkriterium für ein Umschalten auf den Fett-Betrieb kann daher z.B. die Einhaltung einer bestimmten Regenerationstemperatur sein, die im Speicherkatalysator 27 vorliegen muss. Über den Temperatursensor 30 kann aber auch eine Grenztemperatur festgestellt werden, bei der ein Zurückschalten auf den Mager-Betrieb erforderlich ist, weil beispielsweise Temperaturen im Bereich der thermischen Belastungsgrenze des Speicherkatalysators 27 und anderer Motorbauteile erreicht wird. Außerdem gestattet der Temperatursensor 30 ein gezieltes Zuheizen über exotherme Reaktionen im Oxidationskatalysator 28, um den Adsorberkatalysator 27 möglichst rasch auf eine optimale Betriebstemperatur zu bringen.

Mit Hilfe der NOₓ-Sensoren 31 und 32, die beiderseits des Speicherkatalysators 27 im Abgasstrang angeordnet sind, lässt sich auf besonders einfache Weise der jeweils aktuelle Beladezustand des Speicherkatalysators 27 ermitteln.

Der HC-Sensor 33 im Auslassbereich des Speicherkatalysators 25 dient zur Detektion von Reduktionsmitteln, die aus dem Adsorberkatalysator 27 austreten. Übersteigt die im Abgasstrom nach dem Adsorberkatalysator 27 vorhandene Reduktionsmittelmenge einen vorbestimmten Schwellwert, bedeutet dies für den Fett-Betrieb, dass der Speicherkatalysator 27 vollständig regeneriert ist, oder für den Mager-Betrieb, dass ein Funktionsfehler im Speicherkatalysator 27 vorliegt. Anstelle eines HC-Sensors können zusätzlich oder alternativ auch andere Reduktionsmittelsensoren vorgesehen sein, oder eine Lambda-Sonde.

## Patentansprüche

1. Abgaskonvertersystem für einen Dieselmotor mit
- einem regenerierbaren Speicherkatalysatorelement (27) zur Speicherung von Stickoxiden bei einem mageren Betrieb des Dieselmotors (10),
- einem dem Speicherkatalysatorelement (28) nachgeschalteten DeNOx-Katalysatorelement (29), ausgebildet zur Reduktion von nicht im Speicherkatalysatorelement (27) gespeicherten Stickoxiden mittels im DeNOx-Katalysatorelement (29) eingespeichertem Reduktionsmittel sowie
- einer Reduktionsmittelversorgung zur Zufuhr von Reduktionsmittel zum DeNOx-Katalysatorelements (29).

2. Abgaskonvertersystem nach Anspruch 1,
**dadurch gekennzeichnet, dass**
eine Lambdasonde (33) im Auslassbereich des Speicherkatalysatorelements (27) zur Steuerung der Regeneration des Speicherkatalysatorelements (27) vorgesehen ist.

3. Abgaskonvertersystem nach Anspruch 1 oder 2,
**dadurch gekennzeichnet, dass**
(30) vor dem Speicherkatalysatorelement (27) ein Temperatursensor (30) zur Überwachung der Regenerationstemperatur des Speicherkatalysatorelements (27) vorgesehen ist.

4. Abgaskonvertersystem nach einem der Ansprüche 1 bis 3,
**dadurch gekennzeichnet, dass**
dem Speicherkatalysatorelement (28) ein sauerstoffverbrauchendes Katalysatorelement (28) vorgeschaltet ist.

5. Abgaskonvertersystem nach Anspruch 3 und 4,
**dadurch gekennzeichnet, dass**
der Temperatursensor (30) zwischen dem Speicherkatalysatorelement (28) und dem sauerstoffverbrauchenden Katalysatorelement (28) angeordnet ist.

6. Abgaskonvertersystem nach einem der Ansprüche 1 bis 5,
**dadurch gekennzeichnet, dass**
zur Zufuhr von Reduktionsmittel zum DeNOx-Katalysatorelement (29) eine außermotorische Reduktionsmittelzufuhr vorgesehen ist.

7. Abgaskonvertersystem mit einer Motorregelung (23) für den Dieselmotor (10) nach einem der Ansprüche 1 bis 6,
**dadurch gekennzeichnet, dass**
zur Regeneration des Speicherkatalysatorelements (27) die Motorregelung (23) in Abhängigkeit von vorbestimmten Umschaltkriterien ein Umschalten des Dieselmotors (10) auf einen Fett-Betrieb bewirkt.
